(19) **Europäisches Patentamt European Patent Office Office européen des brevets**

(11) **EP 4 206 122 A1**

(12) # EUROPEAN PATENT APPLICATION
published in accordance with Art. 153(4) EPC

(43) Date of publication:
**05.07.2023 Bulletin 2023/27**

(21) Application number: **21862175.3**

(22) Date of filing: **16.06.2021**

(51) International Patent Classification (IPC):
*C01B 11/02* (2006.01)   *C02F 1/76* (2023.01)
*A61L 2/18* (2006.01)   *A01N 59/00* (2006.01)

(86) International application number:
**PCT/RU2021/000255**

(87) International publication number:
**WO 2022/045925 (03.03.2022 Gazette 2022/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.08.2020 RU 2020128785**

(71) Applicant: **Nexigreen Solutions Ltd**
**Limassol (CY)**

(72) Inventors:
• **VELKOVICH, Mikhail Abramovich**
 **Sankt-Peterburg, 191186 (RU)**
• **SHMATKOV, Aleksandr Alekseevich**
 **Sankt- Peterburg, 197373 (RU)**
• **RUCHYEV, Andrei Andreevich**
 **Sankt-Peterburg, 197373 (RU)**
• **SHMATKOVA, Emiliya Borisovna**
 **Sankt- Peterburg, 197373 (RU)**

(74) Representative: **Betten & Resch**
**Patent- und Rechtsanwälte PartGmbB**
**Maximiliansplatz 14**
**80333 München (DE)**

(54) **METHOD OF PRODUCING A STABILIZED AQUEOUS CHLORINE DIOXIDE SOLUTION**

(57) The invention relates to the chemical industry and can be used in the production of an aqueous chlorine dioxide solution for disinfection, water purification, sterilization and bleaching. To produce a stabilized aqueous chlorine dioxide solution, in the first step two aqueous solutions, (A) and (B), are prepared. To prepare the first solution (A), metallic or ammonium chloride (AI), metallic or ammonium carbonate (A2) and metallic or ammonium bicarbonate (A3) are dissolved in water. The mass ratio of (B1) to (A2+A3) is (2.4-3.0):1. To prepare the second solution (B). metallic or ammonium persulfate (B1) and metallic or ammonium bisulfate (B2) are dissolved in water. The mass ratio of (B1) to (B2) is 3:1. In the second step, solution (B) is added to solution (A). The invention provides maximum production of the end product (aqueous chlorine dioxide solution) that does not have destabilizing side products and can be stored at a temperature of up to 30°C and at normal atmospheric pressure for at least 12 months.

EP 4 206 122 A1

**Description**

<u>PERTINENT ART</u>

The claimed invention relates to the chemical industry and can be used in the production of an aqueous chlorine dioxide solution for disinfection, water purification, sterilization and bleaching.

<u>PRIOR ART</u>

There is a method of producing an aqueous chlorine dioxide solution which comprises the following stages: a) producing chloride, B) producing peroxodisulfate, c) combining chloride and peroxodisulfate in an aqueous system with a molar ratio of peroxodisulfate to chloride $[S_2O_8^{2-}]/[ClO_2^-]$ greater than 1 with the formation of an aqueous chlorine dioxide solution, where no additional buffer is added to produce an aqueous chlorine dioxide solution (RF Patent No. 2567937, 2015).

The disadvantage of this method is the formation of destabilizing side products, such as hypochloride and chlorine, which do not allow maintaining the stability of the chlorine dioxide solution without the use of cooling devices and overpressure for a long time, as well as the absence of stabilizing substances.

There is also a known method for producing stable and pure liquid chlorine dioxide, which includes the combination of two components in an aqueous solution, one being textone sodium salt (sodium chloride, NaClOz), and the other being sodium peroxodisulfate (sodium persulfate, $Na_2S_2O_8$) or sodium hydrosulfate (sodium bisulfate, $NaHSO_4$). At the first stage an aqueous textone sodium salt solution is prepared, at the second stage an aqueous sodium peroxodisulfate solution or an aqueous sodium hydrosulfate solution is prepared, and at the third stage the aqueous solutions produced at the first and second stages are combined (international application WO2011086579, 2011).

The disadvantage of this method is the lack of stability during preparation (there is no release of carbon dioxide when the components are combined), as well as the inability to maintain the stability of the chlorine dioxide solution for more than 30 days.

There is also a known method for producing chlorine dioxide mixed with oxygen by the reaction of chloride with peroxymonosulfate in the presence of a redox initiating agent in an acidic aqueous solution (international application WO03055797, 2003).

The disadvantage of this method is the low (acidic) pH of the chlorine dioxide solution, which contributes to the destabilization of chlorine dioxide due to the formation of chlorous acid $HClOz$, which, in turn, decomposes into hydrochloric HCl and chloric acid $HClO_3$. In addition, the chlorine dioxide solution contains such a destabilizing side product as hydrogen peroxide.

There is also a method for producing chlorine dioxide which comprises producing an aqueous persulfate solution with a concentration of 0.01-1.0 mole of persulfate per liter, which is buffered to a pH of 3-9; producing an aqueous chloride solution with a concentration of 0.01-1.0 mole of chloride per liter, which is buffered to a pH of 9-12; mixing a persulfate solution with chloride solution with a molar ratio of persulfate to chloride being greater than 2 (US Patent US7303737, 2007).

The disadvantage of this method is the formation of destabilizing side products, such as an excess of persulfate, which forms an acidic medium and causes the formation of chlorous acid $HClOz$, which, in turn, decomposes into hydrochloric HCl and chloric acid $HClO_3$.

<u>DISCLOSURE OF THE INVENTION</u>

The technical issue solved by the claimed invention is to develop a method for producing a stabilized aqueous chlorine dioxide solution, which can be stored at a temperature up to 30°C and normal atmospheric pressure for at least 12 months.

The technical result provided by the claimed invention is to maximize the production of the final product (chlorine dioxide) without destabilizing side products.

The specified technical result is achieved by the fact that in the method for producing a stabilized aqueous chlorine dioxide solution which includes the interaction of two aqueous solutions, one of the solutions (A) is produced by means of dissolving metallic or ammonium chloride (A1), metallic or ammonium carbonate (A2) and metallic or ammonium bicarbonate (A3) in water, with the mass ratio of metallic or ammonium chloride (A1) to metallic or ammonium carbonate or metallic or ammonium bicarbonate (A2+A3) being 2.4-3.0 : 1, and the second of the solutions (B) is produced by means of dissolving metallic or ammonium persulfate (B1) and metallic or ammonium bisulfate (B2) in water, with the mass ratio of metallic or ammonium persulfate (B1) to metallic or ammonium bisulfate (B2) being 3:1.

The technical result is also achieved by the fact that the mass ratio of the components is as follows (mass %):

metallic or ammonium chloride - 0.005-3.939
metallic or ammonium carbonate - 0.001-0.855
metallic or ammonium bicarbonate - 0.001-0.782

metallic or ammonium persulfate - 0.006-4.641
metallic or ammonium bisulfate - 0.002-1.547
water - 88.236 -99.985.

As a metallic chloride, the chloride of an alkaline or alkaline-earth metal, such as sodium, potassium, calcium, magnesium, can be used.

As a metallic carbonate, the carbonate of an alkaline or alkaline-earth metal, such as sodium, potassium, calcium, magnesium, can be used.

As a metallic bicarbonate, the bicarbonate of an alkaline or alkaline-earth metal, such as sodium, potassium, calcium, magnesium, can be used.

As a metallic persulfate, the persulfate of an alkaline or alkaline-earth metal, such as sodium, potassium, calcium, magnesium, can be used.

As a metallic bisulfate, bisulfate of an alkaline or alkaline-earth metal, such as sodium, potassium, calcium, magnesium, can be used.

These components (with sodium, potassium, calcium, magnesium and ammonium ions) are selected based on their greatest prevalence, stability of aqueous solutions and compliance with the maximum permissible concentrations in water.

The method is implemented as follows.

At the first stage, two aqueous solutions (A) and (B) are prepared. To do this, one takes suitable containers made of chemically resistant material, for example, high-density polyethylene (HDP) or unplasticized polyvinyl chloride (PVC-U), or polytetrafluoroethylene (PTFE). Distilled lukewarm water is used for solutions.

To produce the first solution (A), metallic or ammonium chloride (A1), metallic or ammonium carbonate (A2) and metallic or ammonium bicarbonate (A3) are dissolved in water, with the mass ratio (A1) to (A2 +A3) being 2.4-3.0 : 1. Metallic or ammonium chloride is dissolved in water gradually - first in a small amount of water, then water is added to achieve the desired concentration. Metallic or ammonium carbonate with metallic or ammonium bicarbonate are also dissolved in water gradually - first in a small amount of water, then the resulting solution is poured into a container with dissolved metallic or ammonium chloride. Everything is mixed until completely dissolved. Herewith, the following hydrolysis reactions occur:

1) in the case of a single-charged metallic cation

$$MeClOz + H_2O \Leftrightarrow MeOH + HClOz$$

$$Me_2CO_3 + H_2O \Leftrightarrow MeOH + MeHCO_3$$

$$MeHCO_3 + H_2O \Leftrightarrow MeOH + H_2CO_3;$$

2) in the case of a double-charged metallic cation

$$Me(ClO_2)_2 + H_2O \Leftrightarrow MeOHClO_2 + HClOz$$

$$Me(HCO_3)_2 + 2H_2O \Leftrightarrow Me(OH)_2 + 2H_2CO_3,$$

where Me is the metallic cation.
Herewith, calcium carbonate and magnesium carbonate do not hydrolyze, because these salts are not soluble in water.

3) in the case of ammonium ion

$$NH_4ClO_2 + H_2O \Leftrightarrow NH_3{}^*H_2O + HClOz$$

$$(NH_4)_2CO_3 + H_2O \Leftrightarrow NH_3{}^*H_2O + NH_4HCO_3$$

$$NH_4HCO_3 + H_2O \Leftrightarrow NH_3{}^*H_2O + H_2CO_3$$

There is also a reaction with the formation of an aqueous complex:

$$E_2CO_3(\text{diluted}) + 8H_2O = 2E[(H_2O)_4]^+ + CO_3^-,$$

where E is a metallic or ammonium cation.

Those parts of metallic or ammonium chloride, metallic or ammonium carbonate and metallic or ammonium bicarbonate that do not hydrolyze dissolve and dissociate in solution in the form of metallic or ammonium ions ($E^+$), carbonate ion ($CO_3^{2-}$), bicarbonate ion ($HCO_3^-$) and chloride ion ($ClOz^-$):

$$E(ClOz)k \Leftrightarrow E^{k+} + kClOz^-$$

$$E(_{2/k})CO_3 \Leftrightarrow (2/k)E^{k+} + CO_3^{2-}$$

$$E(HCO_3)\kappa \Leftrightarrow E^{k+} + kHCO_3^-,$$

where k is a coefficient equal to 1 or 2 depending on the valence.

To produce the second solution (B), metallic or ammonium persulfate (B1) and metallic or ammonium bisulfate (B2) are dissolved in water, with the mass ratio (B1) to (B2) being 3:1. Metallic or ammonium persulfate is dissolved in water gradually - first in a small amount of water, then water is added to achieve the desired concentration. Then metallic or ammonium bisulfate is added, everything is mixed until completely dissolved. Herewith, the following reactions occur:

1) for metal ion compounds that are not hydrolyzed, completely dissolve in water and dissociate into metal ions ($Me^+$), persulfate ion ($S_2O_8^{2-}$), hydrogen ion ($H^+$) and sulfate ion ($SO_4^{2-}$)

$$Me_{(2/k)}S_2O_8 \Leftrightarrow (2/k)Me^{k+} + S_2O_8^{2-}$$

$$Me(HSO_4)_k \Leftrightarrow Me^{k+} + kHSO_4^-$$

$$HSO_4^- \Leftrightarrow H^+ + SO_4^{2-}$$

2) for metallic ion compounds and ammonium ion compounds that undergo hydrolysis

$$Me_{(2/k)}S_2O_8 + 2HzO = Me_{(2/k)}SO_4 + H_2SO_4 + HzOz$$

$$2Me(HSO_4)_2 + 2H_2O = (MeOH)_2SO_4 + 3H_2SO_4$$

$$(NH_4)_2S_2O_8 + 2H_2O = (NH_4)_2SO_4 + H_2SO_4 + HzOz$$

$$NH_4HSO_4 + 2H_2O = NH_3 {}^*H_2O + H_3O^+ + HSO_4^-$$

Herewith, since the solution is sufficiently diluted during the hydrolysis of persulfate, the resulting small amount of hydrogen peroxide spontaneously disproportionates to water and molecular oxygen:

$$2HzOz = 2H_2O + Oz$$

Therefore, hydrogen peroxide does not remain in the solution.

At the second stage, solutions (A) and (B) are combined by adding solution (B) to solution (A) and mixed well for several minutes.

The mass of the final solution m(s-n) is calculated by the formula:

$$m(s\text{-}n) = m(\text{water}) + m(E(ClO_2)_k) + m(E_{(2/k)}CO_3) + m(E(HCO_3)_k) + m(E_{(2/k)}S_2O_8) + m(E(HSO_4)_k),$$

where E is a metallic or ammonium cation.

The mass ratio of components (mass %) is as follows:

metallic or ammonium chloride - 0.005-3.939
metallic or ammonium carbonate - 0.001-0.855
metallic or ammonium bicarbonate - 0.001-0.782
metallic or ammonium persulfate - 0.006-4.648
metallic or ammonium bisulfate - 0.002-1.547
water-88.229 -99.985.

Then, using a pH meter, the pH value of the solution is monitored - it should be in the range from 5.5 to 7.0.

After that, the final solution is poured into a suitable container and closed with a lid. The solution is left in the container for 48 hours at room temperature (20-25 ° C). During this time, if possible, the container is shaken for more efficient reactions.

Herewith, the following chemical reactions occur:

$$E_{(2/k)}S_2O_8 + (2/k)E(ClO_2)_k = 2ClO_2 + 2E_{(2/k)}SO_4$$

$$5E(ClO_2)_k + 4E(HSO_4)_k = 4kClO_2 + 4kE_{(2/k)}SO_4 + 2kH_2O + 3Cl_k$$

$$2E_{(2/k)}CO_3(excess) + (2/k)E(HSO_4)_k = E_{(2/k)}CO_3(remainder) + 2E_{(2/k)}SO_4 +$$

$$COz + + H_2O$$

$$E(HSO_4)_k + E(HCO_3)_k - kE_{(2/k)}SO_4 + kH_2O + kCO^2,$$

where E is a metallic or ammonium cation, k is a coefficient equal to 1 or 2 depending on the valence.

Thus, a chlorine dioxide solution is formed, which contains a small amount of sulfate, chloride and carbon dioxide as side products, with carbon dioxide evaporating from the solution upon completion of the reactions. Also, a small amount of carbonate remains in the solution, since only part of the carbonate reacts. These side products do not destabilize chlorine dioxide. Herewith, a slightly alkaline medium of the solution is maintained, which prevents the chlorine dioxide from decomposition into hydrochloric and chloric acids. This is what ensures the stability of chlorine dioxide.

Simultaneous use of persulfate and bisulfate in solution (B) increases the yield of chlorine dioxide and allows reactions to occur at room temperature.

Simultaneous use of carbonate and bicarbonate in solution (A) allows to regulate the pH of the solution (the concentration of hydroxyl ions ($OH^-$) and reduce the amount of sulfate ions in the solution. The gradual dissolution of a mixture of carbonate and bicarbonate leads to the formation of metallic ion aqueous complexes that attract hydroxyl ions ($OH^-$), thereby creating a slightly alkaline environment that helps stabilize the solution in the long term.

The simultaneous use of carbonate and bisulfate also leads to the formation of carbon dioxide, which prevents the decomposition of chlorine dioxide at the preparing stage.

In addition, due to the specified mass ratio of components, the maximum production of the final product (chlorine dioxide) is ensured with optimal pH stabilization.

<u>EMBODIMENT OF INVENTION</u>

The invention can be illustrated, but not limited to the following examples of its specific implementation.

Example 1.

To produce the first solution (A), a 1.5-liter HDP container (container No. 1) is taken and 15 ml of lukewarm water is poured into it. Then 0.050 g of sodium chloride (0.005% of the final solution mass) is added and dissolved in water for about 1 min. Then 850 ml of lukewarm water is added. Then a 100-ml HDP container (container No. 2) is taken, 35 ml of water is poured into it. After that, 0.01 g (0.001% of the final solution mass) of sodium carbonate and 0.01 g (0.001% of the final solution mass) of sodium bicarbonate are added successively to container No. 2 and mixed in water for about 1 min. After that, the solution from container No. 2 is poured into container No. 1 and stirred for 10-15 minutes until completely dissolved.

To produce the second solution (B), a 1-liter HDP container (container No. 3) is taken, and 30 ml of lukewarm water is poured into it. Then 0.062 g (0.006% of the final solution mass) of sodium persulfate is added and dissolved in water for about 1 min. Then 70 ml of lukewarm water is added. After that, 0.021 g of sodium bisulfate (0.002% of the final solution mass) is added and stirred for 10-15 minutes until completely dissolved.

The solution (B) is added to solution (A) and mixed well for about 2 minutes.

The mass of the final solution m (s-n) is

$$m(s-n) = 900+100+0.050+0.01+0.01+0.062+0.021=1000.153 \text{ g.}$$

Herewith, the mass ratios of the components (mass %) are as follows:

sodium chloride (NaClOz) - 0.005 %
sodium carbonate ($Na_2CO_3$) - 0.001 %
sodium bicarbonate ($NaHCO_3$) - 0.001 %
sodium persulfate ($Na_2S_2O_8$) - 0.006 %
sodium bisulfate ($NaHSO_4$) - 0.002 %
water ($H_2O$) - 99.985%

After that, the pH value of the solution is measured with a pH meter - it is equal to 6.5- 7.0.
Then the final solution is poured into a 1-liter container and closed with a lid (the container and the lid are made of HDP). The solution is left in the container for 48 hours at room temperature (20-25°C). During this time, if possible, the container is shaken (2-3 times per day) for a more efficient reaction.
As a result, 0.003% chlorine dioxide solution is produced.

Example 2.

To produce the first solution (A), a 1.5-liter PVC-U container (container No. 1) is taken and 15 ml of lukewarm water is poured into it. Then 5.12 g of sodium chloride (0.50% of the final solution mass) is added and dissolved in water for about 1 min. Then 850 ml of lukewarm water is added. Then a 100-ml HDP container (container No. 2) is taken, 35 ml of water is poured into it. After that, 1.01 g (0.10% of the final solution mass) of sodium carbonate and 1.01 g (0.10% of the final solution mass) of sodium bicarbonate are sequentially added to container No. 2 and mixed in water for about 1 min. After that, the solution from container No. 2 is poured into container No. 1 and stirred for 10-15 minutes until completely dissolved.
To produce the second solution (B), a 1-liter PVC-U container (container No. 3) is taken and 30 ml of lukewarm water is poured into it. Then 6.3 g (0.62% of the final solution mass) of sodium persulfate is added and dissolved in water for about 1 min. Then 70 ml of lukewarm water is added. After that, 2.1 g of sodium bisulfate (0.21% of the final solution mass) is added and stirred for 10-15 minutes until completely dissolved.
The solution (B) is added to solution (A) and mixed well for about 2 minutes.
The mass of the final solution m (s-n) is

$$m(s-n)=900+100+5.12+1.01+1.01+6.3+2.1=1015.54 \text{ g.}$$

Herewith, the mass ratios of the components (mass %) are as follows:

sodium chloride ($NaClO_2$) - 0.50 %
sodium carbonate ($Na_2CO_3$) -0.10 %
sodium bicarbonate ($NaHCO_3$) - 0.10%
sodium persulfate ($Na_2S_2O_8$) - 0.62 %
sodium bisulfate ($NaHSO_4$) - 0.21 %
water ($H_2O$) - 98.47%

After that, the pH value of the solution is measured with a pH meter - it is equal to 6.0- 6.5.
Then the finished solution is poured into a 1.5-liter container and closed with a lid (the container with the lid are made of PVC-U). The solution is left in the container for 48 hours at room temperature (20-25°C). During this time, if possible, the container is shaken (2-3 times per day) for a more efficient reaction.
As a result, a 0.3% chlorine dioxide solution is produced.

Example 3.

To produce the first solution (A), a 1.5-liter PTFE container (container No. 1) is taken and 150 ml of lukewarm water is poured into it. Then 37.730 g of sodium chloride (3.385% of the final solution mass) is added and dissolved in water for about 1 min. Then 400 ml of lukewarm water is added. Then a 150-ml HDP container is taken (container No. 2), 100 ml of water is poured into it. After that, 7.443 g (0.668% of the final solution mass) of sodium carbonate and 7.443 g (0.668% of the final solution mass) of sodium bicarbonate are sequentially added to container No. 2 and mixed in water for about 1 min. After that, the solution from container No. 2 is poured into container No. 1 and stirred for 10-15 minutes until completely dissolved.

To produce the second solution (B), a 1-liter PTFE container (container No. 3) is taken and 250 ml of lukewarm water is poured into it. Then 46.425 g (4.165% of the final solution mass) of sodium persulfate is added and dissolved in water for about 1 min. Then 100 ml of lukewarm water is added. After that, 15.475 g of sodium bisulfate (1.388% of the final solution mass) is added and stirred for 10-15 minutes until completely dissolved.

The solution (B) is added to solution (A) and mixed well for about 2 minutes.

The mass of the final solution m (s-n) is

$$m \ (s\text{-}n) = 650 + 350 + 37.730 + 7.443 + 7.443 + 15.475 + 46.425 = 1114.516 \ g$$

Herewith, the mass ratios of the components (mass %) are as follows:

sodium chloride (NaClOz) - 3.385 %
sodium carbonate ($Na_2CO_3$) - 0.668%
sodium bicarbonate ($NaHCO_3$) - 0.668%
sodium persulfate ($Na_2S_2O_8$) -4.165 %
sodium bisulfate ($NaHSO_4$) - 1.388 %
water ($H_2O$) - 89.726%

After that, the pH value of the solution is measured with a pH meter - it is equal to 5.5- 6.0.

Then the final solution is poured into a 1.5-liter container and closed with a lid (the container with the lid are made of PTFE). The solution is left in the container for 48 hours at room temperature (20-25°C). During this time, if possible, the container is shaken (2-3 times per day) for a more efficient reaction.

As a result, a 2% chlorine dioxide solution is produced.

Example 4.

To produce the first solution (A), a 1.5-liter HDP container (container No. 1) is taken and 15 ml of lukewarm water is poured into it. Then 0.06 g of potassium chloride (0.006% of the final solution mass) is added and dissolved in water for about 1 min. Then 850 ml of lukewarm water is added. Then a 100-ml HDP container (container No. 2) is taken, 35 ml of water is poured into it. After that, 0.013 g (0.001% of the final solution mass) of potassium carbonate and 0.012 g (0.001% of the final solution mass) of potassium bicarbonate are added successively to container No. 2 and mixed in water for about 1 min. After that, the solution from container No. 2 is poured into container No. 1 and stirred for 10-15 minutes until completely dissolved.

To produce the second solution (B), a 1-liter HDP container (container No. 3) is taken, and 30 ml of lukewarm water is poured into it. Then 0.070 g (0.006% of the final solution mass) of potassium persulfate is added and dissolved in water for about 1 min. Then 70 ml of lukewarm water is added. After that, 0.024 g of potassium bisulfate (0.002% of the final solution mass) is added and stirred for 10-15 minutes until completely dissolved.

The solution (B) is added to solution (A) and mixed well for about 2 minutes.

The mass of the final solution m (s-n) is

$$m \ (s\text{-}n) = 900 + 100 + 0.06 + 0.013 + 0.012 + 0.070 + 0.024 = 1000.179 \ g$$

Herewith, the mass ratios of the components (mass %) are as follows:

potassium chloride (KClOz) - 0.006 %
potassium carbonate ($K_2CO_3$) - 0.001%
potassium bicarbonate ($KHCO_3$) - 0.001%
potassium persulfate ($K_2S_2O_8$) - 0.006%
potassium bisulfate ($KHSO_4$) - 0.002 %
water ($H_2O$) - 99.984%

After that, the pH value of the solution is measured with a pH meter - it is equal to 6.5- 7.0.

Then the final solution is poured into a 1-liter container and closed with a lid (the container and the lid are made of HDP). The solution is left in the container for 48 hours at room temperature (20-25°C). During this time, if possible, the container is shaken (2-3 times per day) for a more efficient reaction.

As a result, 0.003% chlorine dioxide solution is produced.

Example 5.

To produce the first solution (A), a 1.5-liter PVC-U container (container No. 1) is taken and 15 ml of lukewarm water is poured into it. Then 6.059 g of potassium chloride (0.595% of the final solution mass) is added and dissolved in water for about 1 min. Then 850 ml of lukewarm water is added. Then a 100-ml HDP container (container No. 2) is taken, 35 ml of water is poured into it. After that, 1.315 g (0.129% of the final solution mass) of potassium carbonate and 1.202 g (0.118% of the final solution mass) of potassium bicarbonate are sequentially added to container No. 2 and mixed in water for about 1 min. After that, the solution from container No. 2 is poured into container No. 1 and stirred for 10-15 minutes until completely dissolved.

To produce the second solution (B), a 1-liter PVC-U container (container No. 3) is taken and 30 ml of lukewarm water is poured into it. Then 7.150 g (0.702% of the final solution mass) of potassium persulfate is added and dissolved in water for about 1 min. Then 70 ml of lukewarm water is added. After that, 2.379 g of potassium bisulfate (0.234% of the final solution mass) is added and stirred for 10-15 minutes until completely dissolved.

The solution (B) is added to solution (A) and mixed well for about 2 minutes.

The mass of the final solution m (s-n) is

$$m\ (s\text{-}n) = 900 + 100 + 6.059 + 1.315 + 1.202 + 7.150 + 2.379 = 1018.105\ g$$

Herewith, the mass ratios of the components (mass %) are as follows:

potassium chloride (KClOz) - 0.595%
potassium carbonate ($K_2CO_3$) - 0.129%
potassium bicarbonate ($KHCO_3$) -0.118%
potassium persulfate ($K_2S_2O_8$) - 0.702%
potassium bisulfate ($KHSO_4$) - 0.234 %
water ($H_2O$) - 98.222%

After that, the pH value of the solution is measured with a pH meter - it is equal to 6.0- 6.5.

Then the finished solution is poured into a 1.5-liter container and closed with a lid (the container with the lid are made of PVC-U). The solution is left in the container for 48 hours at room temperature (20-25°C). During this time, if possible, the container is shaken (2-3 times per day) for a more efficient reaction.

As a result, a 0.3% chlorine dioxide solution is produced.

Example 6.

To produce the first solution (A), a 1.5-liter PTFE container (container No. 1) is taken and 150 ml of lukewarm water is poured into it. Then 44.647 g of potassium chloride (3.939% of the final solution mass) is added and dissolved in water for about 1 min. Then 400 ml of lukewarm water is added. Then a 150-ml HDP container is taken (container No. 2), 100 ml of water is poured into it. After that, 9.689 g (0.855% of the final solution mass) of potassium carbonate and 8.858 g (0.782% of the final solution mass) of potassium bicarbonate are sequentially added to container No. 2 and mixed in water for about 1 min. After that, the solution from container No. 2 is poured into container No. 1 and stirred for 10-15 minutes until completely dissolved.

To produce the second solution (B), a 1-liter PTFE container (container No. 3) is taken and 250 ml of lukewarm water is poured into it. Then 52.685 g (4.648% of the final solution mass) of potassium persulfate is added and dissolved in water for about 1 min. Then 100 ml of lukewarm water is added. After that, 17.531 g of potassium bisulfate (1.547% of the final solution mass) is added and stirred for 10-15 minutes until completely dissolved.

The solution (B) is added to solution (A) and mixed well for about 2 minutes.

The mass of the final solution m (s-n) is

$$m\ (s\text{-}n) = 650 + 350 + 44.647 + 9.689 + 8.858 + 17.531 + 52.685 = 1133.410\ g$$

Herewith, the mass ratios of the components (mass %) are as follows:

potassium chloride (KClOz) - 3.939 %
potassium carbonate ($K_2CO_3$) - 0.855 %
potassium bicarbonate ($KHCO_3$) - 0.782%
potassium persulfate ($K_2S_2O_8$) - 4.648%
potassium bisulfate ($KHSO_4$) - 1.547 %
water ($H_2O$) - 88.229%

After that, the pH value of the solution is measured with a pH meter - it is equal to 5.5- 6.0.

Then the final solution is poured into a 1.5-liter container and closed with a lid (the container with the lid are made of PTFE). The solution is left in the container for 48 hours at room temperature (20-25°C). During this time, if possible, the container is shaken (2-3 times per day) for a more efficient reaction.

As a result, a 2% chlorine dioxide solution is produced.

Example 7.

To produce the first solution (A), a 1.5-liter HDP container (container No. 1) is taken and 15 ml of lukewarm water is poured into it. Then 0.048 g of ammonium chloride (0.005% of the final solution mass) is added and dissolved in water for about 1 min. Then 850 ml of lukewarm water is added. Then a 100-ml HDP container (container No. 2) is taken, 35 ml of water is poured into it. After that, 0.009 g (0.001% of the final solution mass) of ammonium carbonate and 0.009 g (0.001% of the final solution mass) of ammonium bicarbonate are sequentially added to container No. 2 and mixed in water for about 1 min. After that, the solution from container No. 2 is poured into container No. 1 and stirred for 10- 15 minutes until completely dissolved.

To produce the second solution (B), a 1-liter PTFE container (container No. 3) is taken and 30 ml of lukewarm water is poured into it. Then 0.059 g (0.006% of the final solution mass) of ammonium persulfate is added and dissolved in water for about 1 min. Then 70 ml of lukewarm water is added. After that, 0.020 g of ammonium bisulfate (0.002% of the final solution mass) is added and stirred for 10-15 minutes until completely dissolved.

The solution (B) is added to solution (A) and mixed well for about 2 minutes.

The mass of the final solution m (s-n) is

$$\text{m (s-n)} = 900 + 100 + 0.048 + 0.009 + 0.009 + 0.059 + 0.020 = 1000.145$$

Herewith, the mass ratios of the components (mass %) are as follows:

ammonium chloride ($NH_4ClO_2$) - 0.005 %
ammonium carbonate ($NH_4CO_3$) - 0.001 %
ammonium bicarbonate ($NH_4HCO_3$) - 0.001%
ammonium persulfate (($NH_4)_2S_2O_8$) - 0.006 %
ammonium bisulfate ($NH_4HSO_4$) - 0.002 %
water ($H_2O$) - 99.985%

After that, the pH value of the solution is measured with a pH meter - it is equal to 6.5- 7.0.

Then the final solution is poured into a 1,5-liter container and closed with a lid (the container and the lid are made of HDP). The solution is left in the container for 48 hours at room temperature (20-25°C). During this time, if possible, the container is shaken (2-3 times per day) for a more efficient reaction.

As a result, 0.003% chlorine dioxide solution is produced.

Example 8.

To produce the first solution (A), a 1.5-liter PVC-U container (container No. 1) is taken and 15 ml of lukewarm water is poured into it. Then 4.864 g of ammonium chloride (0.479% of the final solution mass) is added and dissolved in water for about 1 min. Then 850 ml of lukewarm water is added. Then a 100-ml HDP container (container No. 2) is taken, 35 ml of water is poured into it. After that, 0.915 g (0.090% of the final solution mass) of ammonium carbonate and 0.950 g (0.093% of the final solution mass) of ammonium bicarbonate are added successively to container No. 2 and mixed in water for about 1 min. After that, the solution from container No. 2 is poured into container No. 1 and stirred for 10-15 minutes until completely dissolved.

To produce the second solution (B), a 1-liter PVC-U container (container No. 3) is taken and 30 ml of lukewarm water is poured into it. Then 6.037 g (0.595% of the final solution mass) of ammonium persulfate is added and dissolved in water for about 1 min. Then 70 ml of lukewarm water is added. After that, 2.012 g of ammonium bisulfate (0.198% of the final solution mass) is added and stirred for 10-15 minutes until completely dissolved.

The solution (B) is added to solution (A) and mixed well for about 2 minutes.

The mass of the final solution m (s-n) is

$$\text{m (s-n)} = 900 + 100 + 4.864 + 0.915 + 0.950 + 6.037 + 2.012 = 1014.778$$

Herewith, the mass ratios of the components (mass %) are as follows:

ammonium chloride ($NH_4ClO_2$) - 0.479 %
ammonium carbonate ($(NH_4)_2CO_3$) - 0.090%
ammonium bicarbonate ($NH_4HCO_3$) - 0.093%
ammonium persulfate ($(NH_4)_2S_2O_8$) - 0.595%
ammonium bisulfate ($NH_4HSO_4$) - 0.198 %
water ($H_2O$) - 98.545%

After that, the pH value of the solution is measured with a pH meter - it is equal to 6.0- 6.5.

Then the finished solution is poured into a 1-liter container and closed with a lid (the container with the lid are made of PVC-U). The solution is left in the container for 48 hours at room temperature (20-25°C). During this time, if possible, the container is shaken (2-3 times per day) for a more efficient reaction.

As a result, a 0.3% chlorine dioxide solution is produced.

Example 9.

To produce the first solution (A), a 1.5-liter PTFE container (container No. 1) is taken and 150 ml of lukewarm water is poured into it. Then 35.843 g of ammonium chloride (3.232% of the final solution mass) is added and dissolved in water for about 1 min. Then 400 ml of lukewarm water is added. Then a 150-ml HDP container is taken (container No. 2), 100 ml of water is poured into it. After that, 6.740 g (0.607% of the final solution mass) of ammonium carbonate and 6.998 g (0.631% of the final solution mass) of ammonium bicarbonate are sequentially added to container No. 2 and mixed in water for about 1 min. After that, the solution from container No. 2 is poured into container No. 1 and stirred for 10-15 minutes until completely dissolved.

To produce the second solution (B), a 1-liter PTFE container (container No. 3) is taken and 250 ml of lukewarm water is poured into it. Then 44.490 g (4.012% of the final solution mass) of ammonium persulfate is added and dissolved in water for about 1 min. Then 100 ml of lukewarm water is added. After that, 14.824 g of ammonium bisulfate (1.337% of the final solution mass) is added and stirred for 10-15 minutes until completely dissolved.

The solution (B) is added to solution (A) and mixed well for about 2 minutes.

The mass of the final solution m (s-n) is

$$\text{m (s-n)} = 650 + 350 + 35.843 + 6.740 + 6.998 + 44.490 + 14.824 = 1108.895 \text{ g}$$

Herewith, the mass ratios of the components (mass %) are as follows:

ammonium chloride ($NH_4ClO_2$) - 3.232 %
ammonium carbonate ($(NH4)_2CO_3$) - 0.607 %
ammonium bicarbonate ($NH_4HCO_3$) - 0.631 %
ammonium persulfate ($(NH_4)_2S_2O_8$) - 4.012 %
ammonium bisulfate ($(NH_4)HSO_4$) - 1.337 %
water ($N_2O$) - 90.181%

After that, the pH value of the solution is measured with a pH meter - it is equal to 5.5- 6.0.

Then the final solution is poured into a 1.5-liter container and closed with a lid (the container with the lid are made of PTFE). The solution is left in the container for 48 hours at room temperature (20-25°C). During this time, if possible, the container is shaken (2-3 times per day) for a more efficient reaction.

As a result, a 2% chlorine dioxide solution is produced.

Example 10.

To produce the first solution (A), a 1.5-liter HDP container (container No. 1) is taken and 15 ml of lukewarm water is poured into it. Then 0.049 g of calcium chloride (0.005% of the final solution mass) is added and dissolved in water for about 1 min. Then 850 ml of lukewarm water is added. Then a 100-ml HDP container (container No. 2) is taken, 35 ml of water is poured into it. After that, 0.009 g (0.001% of the final solution mass) of calcium carbonate and 0.010 g (0.001% of the final solution mass) of calcium bicarbonate are added successively to container No. 2 and mixed in water for about 1 min. After that, the solution from container No. 2 is poured into container No. 1 and stirred for 10-15 minutes until completely dissolved.

To produce the second solution (B), a 1-liter HDP container (container No. 3) is taken, and 30 ml of lukewarm water is poured into it. Then 0.060 g (0.006% of the final solution mass) of calcium persulfate is added and dissolved in water for about 1 min. Then 70 ml of lukewarm water is added. After that, 0.020 g of calcium bisulfate (0.002% of the final solution mass) is added and stirred for 10-15 minutes until completely dissolved.

The solution (B) is added to solution (A) and mixed well for about 2 minutes.

The mass of the final solution m (s-n) is

$$m \text{ (s-n)} = 900+100+0.049+0.009+0.010+0.060+0.020=1000.148 \text{ g}$$

Herewith, the mass ratios of the components (mass %) are as follows:

calcium chloride ($Ca(ClO_z)z$) - 0.005 %
calcium carbonate ($CaCO_3$) - 0.001 %
calcium bicarbonate ($Ca(HCO_3)_2$) - 0.001%
calcium persulfate ($CaS_2O_8$) - 0.006 %
calcium bisulfate ($Ca(HSO_4)_2$) - 0.002 %
water ($H_2O$) - 99.985%

After that, the pH value of the solution is measured with a pH meter - it is equal to 6.5- 7.0.

Then the final solution is poured into a 1-liter container and closed with a lid (the container and the lid are made of HDP). The solution is left in the container for 48 hours at room temperature (20-25°C). During this time, if possible, the container is shaken (2-3 times per day) for a more efficient reaction.

As a result, 0.003% chlorine dioxide solution is produced.

Example 11.

To produce the first solution (A), a 1.5-liter PVC-U container (container No. 1) is taken and 15 ml of lukewarm water is poured into it. Then 4.978 g of calcium chloride (0.490% of the final solution mass) is added and dissolved in water for about 1 min. Then 850 ml of lukewarm water is added. Then a 100-ml HDP container (container No. 2) is taken, 35 ml of water is poured into it. After that, 0.952 g (0.094% of the final solution mass) of calcium carbonate and 0.974 g (0.096% of the final solution mass) of calcium bicarbonate are sequentially added to container No. 2 and mixed in water for about 1 min. After that, the solution from container No. 2 is poured into container No. 1 and stirred for 10-15 minutes until completely dissolved.

To produce the second solution (B), a 1-liter PVC-U container (container No. 3) is taken and 30 ml of lukewarm water is poured into it. Then 6.143 g (0.605% of the final solution mass) of calcium persulfate is added and dissolved in water for about 1 min. Then 70 ml of lukewarm water is added. After that, 2.047 g of calcium bisulfate (0.202% of the final solution mass) is added and stirred for 10-15 minutes until completely dissolved.

The solution (B) is added to solution (A) and mixed well for about 2 minutes.

The mass of the final solution m(s-n) is

$$m \text{ (s-n)}=900+100+4.978+0.952+0.974+6.143+2.047=1015.094 \text{ g}$$

Herewith, the mass ratios of the components (mass %) are as follows:

calcium chloride ($Ca(ClO_z)z$) - 0.490 %
calcium carbonate ($CaCO_3$) - 0.094 %
calcium bicarbonate ($Ca(HCO_3)_2$) - 0.096%

calcium persulfate (CaS$_2$O$_8$) - 0.605%
calcium bisulfate (Ca(HSO$_4$)$_2$) - 0.202%
water (H$_2$O) - 98.513%

After that, the pH value of the solution is measured with a pH meter - it is equal to 6.0- 6.5.
Then the finished solution is poured into a 1.5-liter container and closed with a lid (the container with the lid are made of PVC-U). The solution is left in the container for 48 hours at room temperature (20-25°C). During this time, if possible, the container is shaken (2-3 times per day) for a more efficient reaction.
As a result, a 0.3% chlorine dioxide solution is produced.

Example 12.

To produce the first solution (A), a 1.5-liter PTFE container (container No. 1) is taken and 150 ml of lukewarm water is poured into it. Then 36.682 g of calcium chloride (3.301% of the final solution mass) is added and dissolved in water for about 1 min. Then 400 ml of lukewarm water is added. Then a 150-ml HDP container (container No. 2) is taken, 100 ml of water is poured into it. After that, 7.021 g (0.632% of the final solution mass) of calcium carbonate and 7.175 g (0.646% of the final solution mass) of calcium bicarbonate are sequentially added to container No. 2 and mixed in water for about 1 min. After that, the solution from container No. 2 is poured into container No. 1 and stirred for 10-15 minutes until completely dissolved.
To produce the second solution (B), a 1-liter PTFE container (container No. 3) is taken and 250 ml of lukewarm water is poured into it. Then 45.270 g (4.074% of the final solution mass) of calcium persulfate is added and dissolved in water for about 1 min. Then 100 ml of lukewarm water is added. After that, 15.082 g of calcium bisulfate (1.357% of the final solution mass) is added and stirred for 10-15 minutes until completely dissolved.
The solution (B) is added to solution (A) and mixed well for about 2 minutes.
The mass of the final solution m (s-n) is

$$m(s\text{-}n) = 650 + 350 + 36.682 + 7.021 + 7.175 + 15.082 + 45.270 = 1111.23 \text{ g}$$

Herewith, the mass ratios of the components (mass %) are as follows:

calcium chloride (Ca(ClO$_2$)$_2$ - 3.301 %
calcium carbonate (CaCO$_3$) - 0.632%
calcium bicarbonate (Ca(HCO$_3$)$_2$) - 0.646%
calcium persulfate (CaS$_2$O$_8$) - 4.074%
calcium bisulfate (Ca(HSO$_4$)$_2$ - 1.357 %
water (H$_2$O) - 89.990%

After that, the pH value of the solution is measured with a pH meter - it is equal to 5.5- 6.0.
Then the final solution is poured into a 1.5-liter container and closed with a lid (the container with the lid are made of PTFE). The solution is left in the container for 48 hours at room temperature (20-25°C). During this time, if possible, the container is shaken (2-3 times per day) for a more efficient reaction.
As a result, a 2% chlorine dioxide solution is produced.

Example 13.

To produce the first solution (A), a 1.5-liter HDP container (container No. 1) is taken and 15 ml of lukewarm water is poured into it. Then 0.045 g of magnesium chloride (0.005% of the final solution mass) is added and dissolved in water for about 1 min. Then 850 ml of lukewarm water is added. Then a 100-ml HDP container (container No. 2) is taken, 35 ml of water is poured into it. After that, 0.008 g (0.001% of the final solution mass) of magnesium carbonate and 0.009 g (0.001% of the final solution mass) of magnesium bicarbonate are added successively to container No. 2 and stirred in water for about 1 min. After that, the solution from container No. 2 is poured into container No. 1 and stirred for 10-15 minutes until completely dissolved.
To produce the second solution (B), a 1-liter HDP container (container No. 3) is taken, and 30 ml of lukewarm water is poured into it. Then 0.056 g (0.006% of the final solution mass) of magnesium persulfate is added and dissolved in water for about 1 min. Then 70 ml of lukewarm water is added. After that, 0.019 g of magnesium bisulfate (0.002% of the final solution mass) is added and stirred for 10-15 minutes until completely dissolved.
The solution (B) is added to solution (A) and mixed well for about 2 minutes.

The mass of the final solution m (s-n) is

$$m\ (s\text{-}n) = 900+100+0.045+0.008+0.009+0.056+0.019=1000.137\ g$$

Herewith, the mass ratios of the components (mass %) are as follows:

magnesium chloride ($Mg(ClO_2)_2$) - 0.005%
magnesium carbonate ($MgCO_3$) - 0.001%
magnesium bicarbonate ($Mg(HCO_3)_2$) - 0.001%
magnesium persulfate ($MgS_2O_8$) - 0.006%
magnesium bisulfate ($Mg(HSO_4)_2$) - 0.002 %
water ($H_2O$) - 99.985%

After that, the pH value of the solution is measured with a pH meter - it is equal to 6.5- 7.0.
Then the final solution is poured into a 1-liter container and closed with a lid (the container and the lid are made of HDP). The solution is left in the container for 48 hours at room temperature (20-25°C). During this time, if possible, the container is shaken (2-3 times per day) for a more efficient reaction.
As a result, 0.003% chlorine dioxide solution is produced.

Example 14.

To produce the first solution (A), a 1.5-liter PVC-U container (container No. 1) is taken and 15 ml of lukewarm water is poured into it. Then 4.523 g of magnesium chloride (0.446% of the final solution mass) is added and dissolved in water for about 1 min. Then 850 ml of lukewarm water is added. Then a 100-ml HDP container (container No. 2) is taken, 35 ml of water is poured into it. After that, 0.800 g (0.079% of the final solution mass) of magnesium carbonate and 0.878 g (0.087% of the final solution mass) of magnesium bicarbonate are sequentially added to container No. 2 and mixed in water for about 1 min. After that, the solution from container No. 2 is poured into container No. 1 and stirred for 10-15 minutes until completely dissolved.
To produce the second solution (B), a 1-liter PVC-U container (container No. 3) is taken and 30 ml of lukewarm water is poured into it. Then 5.720 g (0.564% of the final solution mass) of magnesium persulfate is added and dissolved in water for about 1 min. Then 70 ml of lukewarm water is added. After that, 1.907 g of magnesium bisulfate (0.188% of the final solution mass) is added and stirred for 10-15 minutes until completely dissolved.
The solution (B) is added to solution (A) and mixed well for about 2 minutes.
The mass of the final solution m (s-n) is

$$m(s\text{-}n) = 900+100+ 4.523 + 0.800 +0.878 + 5.720 + 1.907 = 1013.828\ g.$$

Herewith, the mass ratios of the components (mass %) are as follows:

magnesium chloride ($Mg(ClO_2)_2$) - 0.446 %
magnesium carbonate ($MgCO_3$) - 0.079 %
magnesium bicarbonate ($Mg(HCO_3)_2$) - 0.087%
magnesium persulfate ($MgS_2O_8$) - 0.564%
magnesium bisulfate ($Mg(HSO_4)_2$) - 0.188%,
water ($H_2O$) - 98.636%

After that, the pH value of the solution is measured with a pH meter - it is equal to 6.0- 6.5.
Then the finished solution is poured into a 1.5-liter container and closed with a lid (the container with the lid are made of PVC-U). The solution is left in the container for 48 hours at room temperature (20-25°C). During this time, if possible, the container is shaken (2-3 times per day) for a more efficient reaction.
As a result, a 0.3% chlorine dioxide solution is produced.

Example 15.

To produce the first solution (A), a 1.5-liter PTFE container (container No. 1) is taken and 150 ml of lukewarm water is poured into it. Then 33.328 g of magnesium chloride (3.025% of the final solution mass) is added and dissolved in water for about 1 min. Then 400 ml of lukewarm water is added. Then a 150-ml HDP container (container No. 2) is taken, 100 ml of water is poured into it. After that, 5.898 g (0.535% of the final solution mass) of magnesium carbonate and 6.467 g (0.587% of the final solution mass) of magnesium bicarbonate are sequentially added to container No. 2 and mixed in water for about 1 min. After that, the solution from container No. 2 is poured into container No. 1 and stirred for 10-15 minutes until completely dissolved.

To produce the second solution (B), a 1-liter PTFE container (container No. 3) is taken and 250 ml of lukewarm water is poured into it. Then 42.148 g (3.825% of the final solution mass) of magnesium persulfate is added and dissolved in water for about 1 min. Then 100 ml of lukewarm water is added. After that, 14.051 g of magnesium bisulfate (1.275% of the final solution mass) is added and stirred for 10-15 minutes until completely dissolved.

The solution (B) is added to solution (A) and mixed well for about 2 minutes.

The mass of the final solution m (s-n) is

$$\text{m (s-n)} = 650 + 350 + 33.328 + 5.898 + 6.467 + 14.051 + 42.148 = 1101.892 \text{ g.}$$

Herewith, the mass ratios of the components (mass %) are as follows:

magnesium chloride ($Mg(ClO_2)_2$) - 3.025 %
magnesium carbonate ($MgCO_3$) - 0.535 %
magnesium bicarbonate ($Mg(HCO_3)_2$)- 0.587%
magnesium persulfate ($MgS_2O_8$) - 3.825 %
magnesium bisulfate ($Mg(HSO_4)_2$) - 1.275 %.
water ($H_2O$) - 90.753%

After that, the pH value of the solution is measured with a pH meter - it is equal to 5.5- 6.0.

Then the final solution is poured into a 1.5-liter container and closed with a lid (the container with the lid are made of PTFE). The solution is left in the container for 48 hours at room temperature (20-25°C). During this time, if possible, the container is shaken (2-3 times per day) for a more efficient reaction.

As a result, a 2% chlorine dioxide solution is produced.

INDUSTRIAL APPLICABILITY

The claimed invention makes it possible to produce a stabilized aqueous chlorine dioxide solution, which can be stored at a temperature up to 30°C and normal atmospheric pressure for at least 12 months.

**Claims**

1. The method of producing a stabilized aqueous chlorine dioxide solution, involving the interaction of two aqueous solutions, **characterized in that** one of the solutions (A) is produced by dissolving metallic or ammonium chloride (A1), metallic or ammonium carbonate (A2) and metallic or ammonium bicarbonate (A3) in water, with the mass ratio of metallic or ammonium chloride (A1) to metallic or ammonium carbonate or metallic or ammonium bicarbonate (A2+A3) being 2.4-3.0 : 1, whereas the second of the solutions (B) is obtained by dissolving metallic or ammonium persulfate (B1) and metallic or ammonium bisulfate (B2) in water, with the mass ratio of metallic or ammonium persulfate (B1) to metal or ammonium bisulfate (B2) being 3:1.

2. The method of producing a stabilized aqueous chlorine dioxide solution according to claim 1, identified by the mass ratio of components (mass.%) as follows:

metallic or ammonium chloride - 0.005-3.939
metallic or ammonium carbonate - 0.001-0.855
metallic or ammonium bicarbonate - 0.001-0.782
metallic or ammonium persulfate - 0.006-4.641
metallic or ammonium bisulfate - 0.002-1.547
water - 88.236 -99.985.

## INTERNATIONAL SEARCH REPORT

| | International application No. |
|---|---|
| | PCT/RU 2021/000255 |

A. CLASSIFICATION OF SUBJECT MATTER

C01B 11/02 (2006.01)   C02F 1/76 (2006.01)   A61L 2/18 (2006.01)   A01N 59/00 (2006.01)

According to International Patent Classification (IPC) or to both national classification and IPC

B. FIELDS SEARCHED

Minimum documentation searched (classification system followed by classification symbols)

C01B 11/00, C01B 11/02, C02F 1/72, C02F 1/76, C25B 1/26, A01N 59/00, A01P 1/00, A61L 2/18

Documentation searched other than minimum documentation to the extent that such documents are included in the fields searched

Electronic data base consulted during the international search (name of data base and, where practicable, search terms used)

EAPATIS, ESPACENET, PatSearch (RUPTO internal), USPTO, PATENTSCOPE, Reaxys, STNext, eLIBRARY, Google Patents

C. DOCUMENTS CONSIDERED TO BE RELEVANT

| Category* | Citation of document, with indication, where appropriate, of the relevant passages | Relevant to claim No. |
|---|---|---|
| D, A | RU 2567937 C2 (A.P.F. AKVA SISTEM AG) 10.11.2015, claim 1, abstract, examples | 1, 2 |
| A | US 2006/0018940 A1 (E. I. DU PONT DE NEMOURS AND COMPANY) 26.01.2006, claims 1, 2 | 1, 2 |
| A | RU 2679261 C2 (FEDERAL'NOE GOSUDARSTVENNOE BJUDZHETNOE OBRAZOVATEL'NOE UCHREZHDENIE VYSSHEGO OBRAZOVANIYA "SAMARSKIY GOSUDARSTVENNY TEKHNICHESKY UNIVERSITET") 06.02.2019, abstract | 1, 2 |
| A | EP 3578510 A1 (SCHMID, ERICH) 11.12.2019, abstract | 1, 2 |
| A | US 7927508 B2 (TRUOX, INC.) 19.04.2011, abstract, claim 1 | 1, 2 |

☐ Further documents are listed in the continuation of Box C. ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 11 October 2021 (11.10.2021) | 21 October 2021 (21.10.2021) |

| Name and mailing address of the ISA/ RU | Authorized officer |
|---|---|
| | |
| Facsimile No. | Telephone No. |

Form PCT/ISA/210 (second sheet) (July 1998)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2567937 A
- WO 2011086579 A
- WO 03055797 A
- US 7303737 B